**Europäisches Patentamt**

(19) **European Patent Office**

**Office européen des brevets**

(11) Numéro de publication: **0 050 892**
**A2**

(12) # DEMANDE DE BREVET EUROPEEN

(21) Numéro de dépôt: **81201144.3**

(22) Date de dépôt: **15.10.81**

(51) Int. Cl.³: **B 07 B 13/16**
**B 65 G 47/14, A 22 C 29/00**

---

(30) Priorité: **23.10.80 BE 6047300**

(43) Date de publication de la demande:
**05.05.82 Bulletin 82/18**

(84) Etats contractants désignés:
**AT CH DE FR GB IT LI LU NL SE**

(71) Demandeur: **Andre, Jean-Pierre**
**Chemin du Roeulx 289**
**B-7000 Mons(BE)**

(71) Demandeur: **Lermusiaux, Ergard**
**Rue du Moulin 16**
**B-7032 Spiennes/Mons(BE)**

(72) Inventeur: **Andre, Jean-Pierre**
**Chemin du Roeulx 289**
**B-7000 Mons(BE)**

(72) Inventeur: **Lermusiaux, Ergard**
**Rue du Moulin 16**
**B-7032 Spiennes/Mons(BE)**

(74) Mandataire: **Dellicour, Paul**
**Office de Brevets E. Dellicour rue Fabry 18/012**
**B-4000 Liege(BE)**

---

(54) **Dispositif d'alimentation automatique, particulièrement pour calibreuse à huîtres.**

(57) Le dispositif est conformé de manière à amener en vrac les articles à calibrer sur un disque rotatif, à l'origine et à l'extérieur d'une spirale inscrite dans un cercle de même centre que ledit disque et constituée par une paroi verticale fixe, et à entraîner les articles le long de la face externe de ladite spirale par la rotation du disque de façon à provoquer le grandissement des distances avec, à la fin de la spirale, une arrivée échelonnée des articles.

L'invention s'applique à l'alimentation de calibreuses de différents types pour des articles divers, particulièrement à l'alimentation en huîtres d'une calibreuse à balancelles.

EP 0 050 892 A2

./...

FIG.1

- 1 -

## Dispositif d'alimentation automatique, particulièrement pour calibreuse à huîtres

La présente invention s'applique particulièrement à l'alimentation en huîtres d'une calibreuse.

On connaît sur le marché entre autres une calibreuse à balancelles, où les huîtres arrivant en vrac dans un bac doivent être déposées une par une à la main dans les balancelles. Etant donné le coût de la main d'oeuvre, l'alimentation d'une calibreuse est actuellement assez coûteuse.

Des dispositifs d'alimentation automatique sont déjà connus pour l'alimentation de diverses machines dans l'industrie alimentaire mais ces dispositifs connus ne peuvent s'appliquer à une calibreuse à huîtres.

Le calibrage des huîtres se fait selon deux critères, soit en se basant sur le poids de chacune d'elles, soit en se basant sur ses dimensions ou son volume.

Quel que soit le critère admis pour les calibreuses ou trieuses, le processus implique la sélection une à une des huîtres, dont les formes, dimensions et poids sont éminemment variables.

Suivant l'invention il a paru avantageux de réaliser un dispositif d'alimentation automatique de ces calibreuses ou trieuses basé sur le fait, tout en partant d'une arrivée en vrac, de distancer les huîtres afin de les présenter automatiquement une à une au dispositif de la calibreuse qui permet le tri des huîtres, balancelle, dispositif de mesure ou tout autre dispositif de tri.

Un dispositif d'alimentation automatique suivant l'invention, particulièrement pour calibreuse à huîtres, est caractérisé en ce qu'il est conformé de manière à amener en vrac les articles à calibrer sur un disque rotatif, à l'origine et à l'extérieur d'une spirale inscrite dans un cercle de même centre que ledit disque et constituée par une paroi verticale fixe, et à entraîner par la rotation du disque les articles le long de la face externe de ladite spirale depuis le centre jusqu'à la périphérie, de façon à provoquer le grandissement des distances avec, à la fin de la spirale, une arrivée alignée et échelonné des articles.

Suivant l'invention, les articles à calibrer sont amenés sur le disque rotatif à l'origine de la spirale par un transporteur, par exemple du type transporteur à écailles, à la sortie duquel est prévu un étranglement guidant les articles l'un derrière l'autre contre la face externe de la spirale.

Suivant l'invention encore, sur les faces se faisant vis-à-vis de la spirale montée au-dessus du disque rotatif, est prévu un jeu de chicanes empêchant les articles à calibrer de se déplacer en double et triple file.

Suivant l'invention encore, le dispositif comporte une gouttière de chargement disposée à la fin de la spirale et destinée à s'adapter au-dessus d'au moins un élément à bascule d'une calibreuse, ladite gouttière - dans laquelle se déversent de manière échelonnée l'un après l'autre les articles à calibrer - étant associée à des raclettes à monter sur ladite calibreuse derrière chaque élément à bascule pour venir glisser dans la gouttière et pousser l'article hors de celle-ci dans son élément à bascule correspondant, avec précision et à la vitesse de rotation de la calibreuse.

Suivant une réalisation avantageuse de l'invention, entre le disque de rotation et la gouttière de chargement de la calibreuse est monté un dispositif de séparation et de mise à distance, dans lequel tombe l'article à calibrer arrivant à la fin de la spirale au bord du disque. Ce dispositif consiste en un cône rotatif muni d'un certain nombre de pales triangulaires disposées suivant les génératrices du cône.

Egalement suivant l'invention, à la sortie du disque de rotation est monté un dispositif de dérivation accueillant les articles à calibrer, qui se présenteraient accidentellement en double file, et les renvoyant par un convoyeur approprié dans la trémie de distribution.

Pour mieux faire comprendre l'invention celle-ci est décrite ci-après, avec plus de détails, sur la base des dessins annexés, à titre d'exemple uniquement, montrant en :

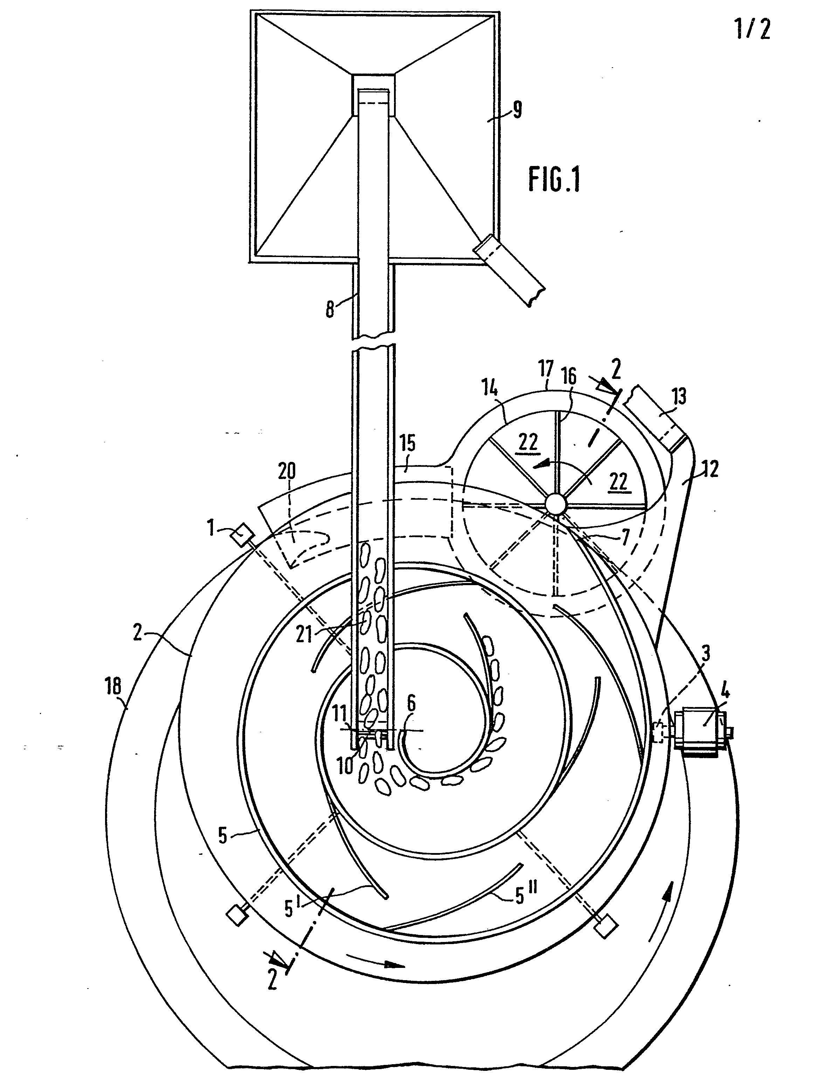

Figure 1 une vue schématique en plan du dispositif d'alimentation automatique suivant l'invention, et

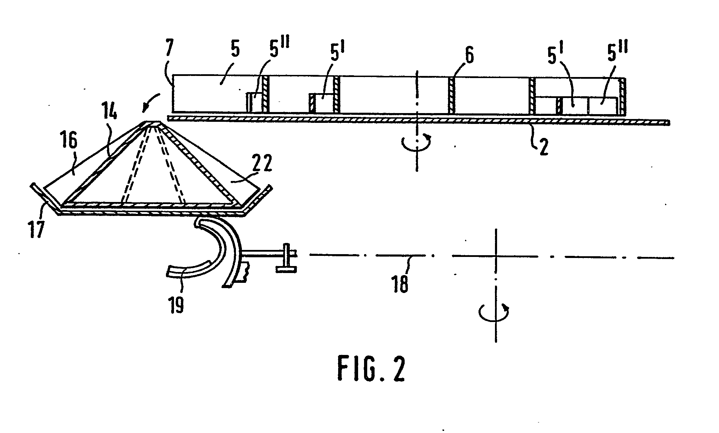

Figure 2 une coupe par 2 - 2 de figure 1.

Le dispositif d'alimentation automatique pour une calibreuse à huîtres à balancelles, réalisé suivant l'invention et représenté au dessin, comprend un châssis 1, représenté ici par ses pieds. Sur ce châssis est monté un disque rotatif 2 entraîné par l'intermédiaire d'une roue

- 4 -

à friction 3 par un moteur 4 dans le sens de la flèche.

Au-dessus du disque rotatif est disposée de manière fixe, solidaire du châssis 1, une bande de tôle posée sur champ et conformée en spirale d'Archimède 5 avec une origine 6 et une fin 7.

Dans le couloir créé par la spirale et à l'origine de celle-ci débouche un transporteur 8, par exemple du type transporteur à écailles dont certaines sont munies de pales ou fourches destinées à provoquer l'entraînement des articles hors d'une trémie de distribution 9, associée au dispositif d'alimentation. Ce transporteur peut être vertical, horizontal ou incliné ou encore être constitué de divers tronçons dans ces différentes orientations. Le transporteur à son extrémité côté dispositif porte sur son axe 10 des galets de friction 11, qui viennent en contact avec le disque rotatif 2. L'axe des galets 11 est disposé parallèlement au-dessus du rayon du disque passant par l'origine 6 de la spirale 5.

Le disque rotatif 2 surmonté de la spirale fixe 5 a pour mission de réaliser l'alignement des huîtres de façon aussi serrée que l'on veut mais en simple file, le long de la spirale à la sortie du disque 2. A cet effet, le transporteur d'alimentation 8 doit être entraîné, de telle sorte qu'il gave celle-ci. Cependant, pour éviter que les huîtres ne cheminent sur le disque ou table 2 en double file ou même en triple file, d'une part sur la face externe de la spirale 5 sont disposées à intervalles appropriés des chicanes 5' constituées par des ressorts à lame, tandis que d'autre part, sur la face interne de ladite spirale sont disposées des chicanes 5" constituées par des contre-ressorts à lame, les chicanes 5" faisant suite aux chicanes 5'. Ces chicanes permettent

0050892

- 5 -

l'alignement des articles à calibrer en une seule file.

A l'endroit de la fin 7 de la spirale et au bord du disque 2 est monté un dispositif de dérivation 12 qui, relié par un convoyeur 13 à la trémie 9, permet d'éliminer en dérivation les articles à calibrer qui se présenteraient accidentellement en double file. Ces articles, renvoyés par le convoyeur 13, tapis roulant ou analogue, sont alors recyclés.

Juste derrière la gouttière de dérivation 12 est prévu un dispositif de séparation et de mise à distance. Ce dispositif constitué par un cône rotatif 14, dont le sommet coïncide approximativement avec le bord de la table ou disque 2 et dont la base se trouve à hauteur d'une gouttière de chargement 15 d'une calibreuse, est pourvu de pales triangulaires 16 disposées radialement sur la hauteur du cône et à intervalles réguliers. L'espacement entre deux pales au sommet du cône est du même ordre de grandeur que la moitié de la dimension de l'article à calibrer.

La gouttière de chargement 15 faisant suite au cône de séparation 14 est fixée à une goulotte fixe 17, au centre de laquelle tourne le cône 14 et qui est pourvue d'une lumière de sortie (non représentée) pour l'article à calibrer passant du cône à la gouttière. La gouttière 15 est conformée en arc de cercle, de manière à s'adapter - lorsque le dispositif suivant l'invention est utilisé pour alimenter une calibreuse à huîtres à balancelles 18 - au-dessus d'une ou plusieurs balancelles 19. A cette gouttière on peut associer sur la calibreuse une série de raclettes, par exemple en caoutchouc, chaque raclette étant disposée derrière une balancelle mais de manière à glisser dans la gouttière, dont elle épouse la forme.

L'extrémité de la gouttière dans le sens de rotation de la calibreuse - qui tourne dans le même sens que celui du cône 14 et du disque 2 - présente une découpe 20.

Le fonctionnement d'un dispositif d'alimentation automatique d'une calibreuse, par exemple à huîtres à balancelles, est très simple. Les huîtres 21 sont versées en vrac dans la trémie de distribution 9, d'où elles sont emportées par le transporteur à chaîne et crochets 8 jusque vers le milieu du disque 2, près de l'origine 6 de la spirale d'Archimède 5. Le disque 2 tourne dans le sens de la flèche et, en tournant, il met en rotation les galets de friction 11 et par suite l'arbre 10 entraînant la chaîne du transporteur. Les huîtres tombant du transporteur sur le disque sont entraînées par celui-ci dans le couloir formé par la spirale et ont tendance à se mettre en file contre la face externe de la spirale 5.

La rotation du disque va entraîner les huîtres l'une derrière l'autre tout le long de la spirale et, au cours de ce déplacement, la distance entre deux huîtres voisines va augmenter constamment. Ainsi dans l'exemple représenté deux huîtres, qui étaient disposées juste l'une derrière l'autre au départ, seront à l'arrivée distantes d'une valeur approximativement égale à la valeur du rayon du disque 2. On peut considérer une perte d'environ 10 % de cette valeur par suite de frottements.

Le jeu de chicanes 5', 5" a pour but d'assurer un alignement des huîtres sur une seule file. Au cours de leur déplacement le long de la face externe de la spirale les huîtres, entraînées par la rotation du disque, rencontrent le premier ressort 5' le long duquel elles montent. Lorsqu'un ressort 5' se décharge d'une huître, l'effort de compression sur ce ressort diminue, le ressort se détend en entraînant dans sa course les huîtres restantes alignées contre sa face externe. Est ainsi provoqué un espacement entre l'huître, qui vient de se libérer du ressort et qui est entraînée par le disque rotatif, et les huîtres suivantes, qui restent en appui sur le ressort pour progresser vers son extrémité et être entraînées également par le disque tournant, de façon à ce que le phénomène se reproduise pour chaque huître.

Avec un tel ressort les huîtres, lorsqu'elles sont libérées de son action, sont ainsi séparées les unes des autres et occupent une position médiane entre deux spires successives de la spirale, jusqu'à ce que le contre-ressort correspondant 5" les repousse vers la face externe de la spirale, contre-ressort qui fonctionne exactement de la même façon qui décrit ci-dessus pour le ressort 5' et qui facilite et assure lui aussi la séparation et l'alignement des huîtres.

Les huîtres à la sortie du disque tournant 2 et à la fin de la spirale 5 arrivent d'une part au dispositif de dérivation 12, qui - comme il a déjà été dit ci-dessus - élimine et ramène à la trémie d'alimentation 9 les huîtres, qui pourraient être accidentellement en double ou triple file, et d'autre part au cône de séparation 14. Les articles à calibrer, tels que des huîtres, arrivent au sommet dudit cône ; à cet endroit les pales triangulaires 16 ont une dimension très réduite et sont fort proches l'une de l'autre, puisque théoriquement coïncidantes au sommet géométrique du cône.

L'espacement des pales entre elles à cet endroit est avantageusement choisi du même ordre de grandeur que la moitié de la dimension de l'article à calibrer, qui s'y présente, de telle manière qu'un seul de ces articles s'engage dans une des alvéoles 22 constituées par les espaces compris entre deux pales 16. Au fur et à mesure que l'article glisse le long de son alvéole conique, les parois triangulaires de celle-ci grandissent en empêchant l'article à calibrer de sauter d'une alvéole dans l'autre.

Par la rotation du cône 14 l'article à calibrer arrive à la lumière de sortie prévue dans la goulotte fixe 17 au-dessus de la gouttière de chargement 15. L'article tombe à travers cette lumière dans ladite gouttière et est entraînée le long de celle-ci par une des raclettes de la calibreuse 18 survenant à ce moment dans la gouttière du fait de la rotation de ladite calibreuse jusqu'à la découpe 20, d'où elle tombe finalement dans la balancelle 19 correspondante passant sous la gouttière.

La vitesse de rotation ou de défilement de la calibreuse dépend de la vitesse de rotation du cône de séparation 14 et il est prévu de réaliser un synchronisme parfait entre ces deux vitesses.

On a décrit ci-dessus et représenté au dessin un dispositif d'alimentation automatique appliqué à une calibreuse à huîtres à balancelles mais, bien entendu, on ne sortirait pas du domaine de l'invention en utilisant le dispositif pour l'alimentation automatique de calibreuse de genre différent pour des articles différents. Il est bien entendu aussi que dans le texte qui précède le mot spirale a été pris dans le sens le plus large et que l'on peut utiliser pour réaliser l'invention une spirale d'Archimède ou d'autres formes de spirales, ou encore une courbe telle qu'une développante de cercle quel qu'en soit le rayon.

Revendications

1. Dispositif d'alimentation automatique, particulièrement pour calibreuse à huîtres, caractérisé en ce qu'il est conformé de manière à amener en vrac les articles à calibrer sur un disque rotatif, à l'origine et à l'extérieur d'une spirale inscrite dans un cercle de même centre que ledit disque et constituée par une paroi verticale fixe, et à entraîner les articles le long de la face externe de ladite spirale par la rotation du disque de façon à provoquer le grandissement des distances avec, à la fin de la spirale, une arrivée échelonnée des articles.

2. Dispositif d'alimentation automatique suivant la revendication 1, caractérisé en ce qu'il consiste en un châssis portant un disque rotatif, des moyens d'entraînement dudit disque et une bande de tôle ou analogue disposée sur champ suivant une spirale inscrite dans un cercle de même centre que ledit disque, ladite spirale étant montée au-dessus du disque de manière fixe et solidaire du châssis.

3. Dispositif d'alimentation automatique suivant l'une quelconque des revendications 1 et 2, caractérisé en ce qu'il est associé à une trémie de distribution, d'où les articles à calibrer sont distribués en vrac sur un transporteur amenant lesdits articles sur le disque rotatif à l'origine de la spirale.

4. Dispositif d'alimentation automatique suivant la revendication 3, caractérisé en ce que le déroulement du transporteur est réalisé par des galets de frottement montés sur l'axe d'extrémité du transporteur et reposant sur le disque rotatif.

5. Dispositif d'alimentation automatique suivant l'une quelconque des revendications 1 et 2, caractérisé en ce que dans le couloir formé par la spirale est prévu un jeu de chicanes empêchant les articles à calibrer de se déplacer en double file ou en triple file.

6. Dispositif d'alimentation automatique suivant la revendication 5, caractérisé en ce que le jeu de chicanes est constitué d'une série de ressorts à lame et d'une série de contre-ressorts à lame montées respectivement sur les faces externe et interne de la spirale, la première série étant destinée à éloigner les articles à calibrer de la face externe de ladite spirale et la seconde à les rapprocher.

7. Dispositif d'alimentation automatique suivant la revendication 3, caractérisé en ce que à la sortie du disque rotatif est monté un dispositif de dérivation accueillant les articles à calibrer, qui se présenteraient accidentellement en double file, et les renvoyant par un convoyeur approprié dans la trémie de distribution.

8. Dispositif d'alimentation automatique suivant l'une quelconque des revendications 1 et 2, caractérisé en ce qu'il comporte une gouttière de chargement disposée de manière fixe à la fin de la spirale en dehors du disque et conformée de manière à s'adapter au-dessus d'au moins un élément à bascule d'une calibreuse, gouttière dans laquelle se déversent de manière échelonnée l'un après l'autre les articles à calibrer.

9. Dispositif d'alimentation automatique suivant la revendication 8, caractérisé en ce que ladite gouttière est associée à des raclettes à monter sur la calibreuse derrière chaque élément à bascule pour venir glisser dans la gouttière et pousser l'article hors de celle-ci dans l'élément

à bascule correspondant.

10. Dispositif d'alimentation automatique suivant l'une quelconque des revendications 1 et 2, caractérisé en ce qu'il comporte un dispositif de séparation et de mise à distance, dans lequel tombe l'article à calibrer arrivant à la fin de la spirale au bord du disque.

11. Dispositif d'alimentation automatique suivant la revendication 10, caractérisé en ce que le dispositif de séparation et de mise à distance est constitué par un cône rotatif, dont le sommet coïncide approximativement avec le bord du disque et dont la base est en correspondance avec une gouttière de chargement alimentant une calibreuse, ledit cône étant pourvu de pales disposées radialement sur la hauteur du cône et à intervalles réguliers.

12. Dispositif d'alimentation suivant la revendication 11, caractérisé en ce que la distance entre deux pales au sommet du cône de séparation est du même ordre de grandeur que la moitié de la dimension de l'article à calibrer.

13. Dispositif d'alimentation suivant la revendication 11, caractérisé en ce que le cône rotatif tourne dans une goulotte pourvue d'une lumière de sortie vers la gouttière de chargement.

14. Dispositif d'alimentation automatique suivant la revendication 11, caractérisé en ce que la vitesse linéaire de la calibreuse et la vitesse linéaire du cône de séparation à sa base sont rigoureusement égales.

0050892

1/2

FIG.1

0050892

2/2

FIG. 2